# EUROPÄISCHE PATENTSCHRIFT

(11) **EP 2 703 682 B1**
(45) Veröffentlichungstag und Bekanntmachung des Hinweises auf die Patenterteilung: **15.06.2016**
(21) Anmeldenummer: 13178555.2
(22) Anmeldetag: 30.07.2013
(51) Int. Cl.: F16D 65/12

(54) **Bremsscheibe**
Brake disc
Disque de frein

(30) Priorität: 28.08.2012 DE 102012107906
(43) Veröffentlichungstag der Anmeldung: 05.03.2014
(73) Patentinhaber: PE Automotive GmbH & Co. KG, 58256 Ennepetal (DE)
(72) Erfinder: Gehrmann, Eckard, 58135 Hagen (DE)
(74) Vertreter: Schweiger, Johannes

(56) Entgegenhaltungen:
- DE-A1- 10 161 719
- GB-A- 1 309 633
- US-A- 2 850 118
- US-A- 5 850 895
- US-A1- 2004 129 509

## Beschreibung

Die vorliegende Erfindung betrifft eine Bremsscheibe-Nabe Kombination gemäß Patentanspruch 1.

Eine gattungsbildende Bremsscheibe mit zugehöriger Achsnabe ist in der EP 1 108 155 B1 beschrieben. Nähere Einzelheiten und Funktionen einer gattungsgemäßen Bremsscheiben-/Nabenverbindung für solche Fahrzeugscheibenbremsen ergeben sich aus der DE 10046705 C1. Die Bremsscheibe wird üblicherweise axial auf die Bremsscheibennabe, die häufig auch eine Radnabe des Fahrzeugs ist, aufgeschoben und gesichert. Die Nabe ist hierzu an ihrer äußeren Umfangsfläche mit Formschlusskonturen, beispielsweise einer zahnförmigen Außenkontur oder Zapfenverbindungen, versehen, in die eine korrespondierende Innenkontur der Bremsscheibe formschlüssig eingreift, so dass eine wechselseitige Verdrehung der Bremsscheibe und Nabe in Rotationsrichtung der Fahrzeugscheibenbremse verhindert wird, mithin die Bremsscheibe gegenüber der Nabe keinen Freiheitsgrad aufweist. Somit wird das Bremsmoment von der Bremsscheibe auf die Nabe übertragen. Druckschrift US 2004/0129509 A1 offenbart eine Scheibenbremse für ein Fahrzeug. Druckschrift DE 101 61 719 A1 offenbart einen Radlagerflansch mit ebener Bremsscheibe.

Aufgabe der vorliegenden Erfindung ist es, die Wärmeentwicklung sowie Standzeiten von gattungsgemäßen Bremsscheiben-/Nabenverbindungen für Fahrzeugscheibenbremsen und somit die Zuverlässigkeit und das Ansprechverhalten der Fahrzeugscheibenbremse insgesamt zu verbessern.

Diese Aufgabe wird durch eine Bremsscheibe-NabeKombination gemäß Patentanspruch 1 gelöst. Vorteilhafte Weiterbildungen der Erfindung sind in den Unteransprüchen angegeben.

Weitere Vorteile, Merkmale und Einzelheiten der Erfindung ergeben sich aus der nachfolgenden Beschreibung bevorzugter Ausführungsbeispiele sowie anhand der Zeichnung. Diese zeigt in
Figur 1 eine perspektivische Ansicht einer ersten Ausführungsform einer nicht erfindungsgemäßen Bremsscheiben-/Nabenverbindung für Fahrzeugscheibenbremsen mit Verschleißblechen sowie einer Bremsscheibe und einen vergrößert dargestellten Ausschnitt A und
Figur 2 eine perspektivische Ansicht einer Ausführungsform einer erfindungsgemäßen Bremsscheibe für Fahrzeugscheibenbremsen und einen vergrößert dargestellten Ausschnitt B.

In den Figuren sind gleiche Bauteile und Bauteile mit gleicher Funktion mit den gleichen Bezugszeichen gekennzeichnet.

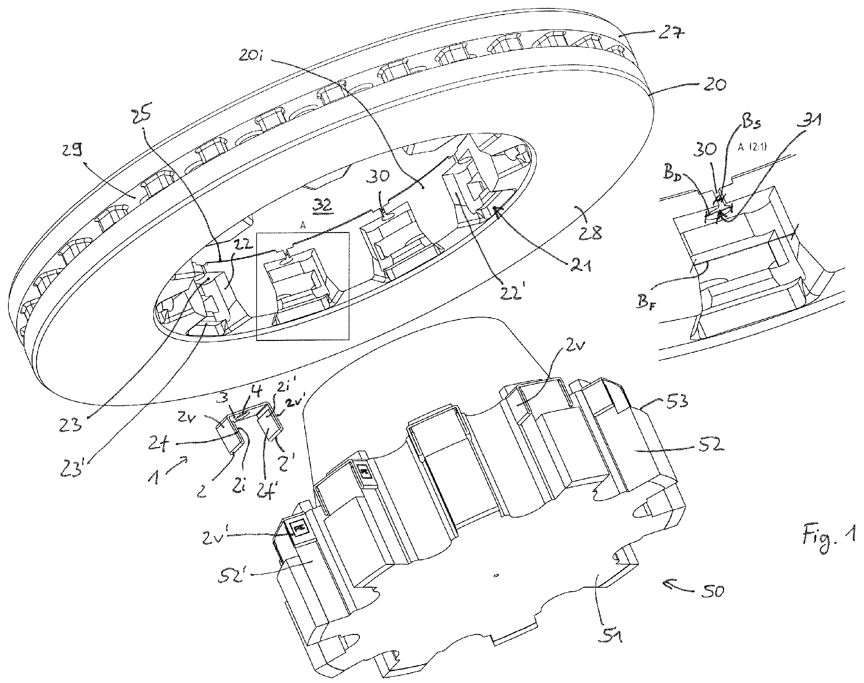

Die Figur 1 zeigt eine Bremsscheiben-/Nabenverbindungsanordnung für Fahrzeugscheibenbremsen mit einer, insbesondere innen belüfteten, Bremsscheibe 20, die mit einer konzentrisch zur Bremsscheibe ausgebildeten Aufnahmeöffnung 32 auf eine Bremsnabe 50 axial aufschiebbar ist. Die Bremsscheibe 20 weist zwei Reibringe 27, 28 mit zwischen den Reibringen 27, 28 verlaufenden Lüftungskanälen 29 auf. An einem Innenumfang 20i weist die Bremsscheibe 20 mehrere, gleichmäßig am konzentrisch zur Bremsscheibe 20 verlaufenden, insbesondere rotationssymmetrisch ausgebildeten Innenumfang 20i verteilte, radial ausgerichtete Nockenaufnahmen 21 als Formschlusskonturen auf, in die Nocken 51 der Bremsnabe 50 aufnehmbar sind. Die Nockenaufnahmen 21 sind U-förmig korrespondierend zu den Nocken 51 ausgebildet, wobei seitliche Abstützflächen 22, 22' der Nockenaufnahmen 21 beim Betrieb der Fahrzeugscheibenbremse mit korrespondierenden Abstützflächen 52, 52' der Nocken 51 zusammenwirken, indem diese sich in Rotationsrichtung beim Bremsen aneinander abstützen, so dass die Bremskraft von der Bremsscheibe 20 auf die Bremsnabe 50 übertragen wird. In Axialrichtung der Bremsnabe 50 stützt sich die Bremsscheibe 20 mit Auflageflächen 23 und/oder Auflageflächen 23' der Nockenaufnahmen 21 an korrespondierenden Auflageflächen 53 und/oder Auflageflächen 53' der Nocken 51 ab.

Zwischen den Nocken 51 und die jeweils korrespondierenden Nockenaufnahmen 21 sind Verschleißbleche 1 einsetzbar, insbesondere ausschließlich im Bereich der Abstützflächen 22, 22', 52, 52' sowie der Auflageflächen 23, 23', 53, 53'. Die Auflageflächen 23, 23', 53, 53' sind vorzugsweise stufenförmig ausgebildet, wobei die Stufen verschiedene Funktionen aufweisen können; insbesondere kann für die Auflage der Verschleißbleche 1 eine andere Stufe vorgesehen sein wie für die Auflage der Nocken 51, wobei auch die Nocken 51, insbesondere korrespondierende, Stufen aufweisen können.

Die Verschleißbleche 1 sind jeweils als U-Profile gefalzt, wobei an einen Zwischenschenkel 3 (Boden des U-Profils) jeweils seitlich gegenüberliegend Verschleißschenkel 2, 2' im Wesentlichen orthogonal zu dem Zwischenschenkel 3 verlaufend anschließen (Schenkel des U-Profils).

Der Zwischenschenkel 3 weist eine den Zwischenschenkel 3 durchsetzende Durchgangsöffnung 4 zur Fixierung der Verschleißbleche 1 mit der Bremsscheibe 20 und der Bremsnabe 50 auf. Hierzu sind an der Bremsscheibe 20 die Auflageflächen 23 axial durchsetzende Durchgangsöffnungen 31 vorgesehen, und zwar an jeweils den Durchgangsöffnungen 4 korrespondierenden Positionen. Durch nicht dargestellte Fixiermittel, insbesondere Schrauben, die sich an einer Fixierseite 25 der Bremsscheibe 20 abstützen und in Vertiefungen 26 eingelassen sind, um eine Funktion des Reibrings 27 nicht zu beeinträchtigen, werden die Verschleißbleche 1 an der Bremsscheibe 20 fixiert. Es ist denkbar, mit den Fixiermitteln gleichzeitig auch die Bremsnabe 50 zu fixieren, insbesondere durch Verschraubung. Die Durchgangsöffnungen 31 weisen radial zur Aufnahmeöffnung 32 gerichtet jeweils einen, insbesondere einzigen, Schlitz 30 auf. Der Schlitz 30 verläuft zumindest überwiegend (hier vollständig) in axialer Richtung.

Auf der einen Seite ist der Schlitz 30, insbesondere vollständig, zu der Aufnahmeöffnung offen ausgebildet. Auf der gegenüberliegenden Seite ist der Schlitz 30, insbesondere vollständig, zu der Durchgangsöffnung 31 offen ausgebildet. In, insbesondere beiden, in Axialrichtung liegenden Enden der Schlitze 30 sind diese offen ausgebildet.

Die Schlitze 30 weisen eine Breite B_{S} von 2 mm auf. Die Durchgangsöffnungen 31 weisen eine Breite B_{D} von 9,5 mm auf. Die Formschlusskonturen weisen bei der ersten Ausführungsform eine Breite B_{F} von 36,3mm auf, wobei dies bei der ersten Ausführungsform der Abstand zwischen den jeweils gegenüberliegenden Abstützflächen 22, 22' ist.

Die Verschleißschenkel 2 stützen sich jeweils mit einer äußeren Verschleißfläche 2v an der Abstützfläche 22 und mit einer inneren Verschleißfläche 2i an der Abstützfläche 52 ab. Das Gleiche gilt korrespondierend für den gegenüberliegenden Verschleißschenkel 2', der sich mit seiner äußeren Verschleißfläche 2v' an der Abstützfläche 22' und mit seiner inneren Verschleißfläche 2i' an der Abstützfläche 52' abstützt. Beim Betrieb der Bremsscheiben-/Nabenverbindungsanordnung beziehungsweise der Fahrzeugscheibenbremse tritt an den inneren und äußeren Verschleißflächen 2v, 2v', 2i, 2i' der überwiegende Verschleiß auf. Hierzu ist es insbesondere vorgesehen, dass die Verschleißschenkel 2, 2' jeweils einen, insbesondere nach innen gefalzten, Falzabschnitt 2f, 2f' aufweisen, so dass die Verschleißschenkel 2, 2' doppelt so dick wie der Zwischenschenkel 3 ausgebildet sind (Doppelprofil). Die Falzabschnitte 2f, 2f' bilden somit auch die inneren Verschleißflächen 2i, 2i' aus.

Die Montage der Bremsscheiben-/Nabenverbindungsanordnung ist denkbar einfach:
- Aufclipsen der Verschleißbleche 1 auf die korrespondierenden Nocken 51, so dass die Verschleißbleche 1 die Abstützflächen 52, 52' und die Auflageflächen 53 bedecken,
- Aufsetzen der Nockenaufnahmen 21 der Bremsscheibe 20 auf die korrespondierenden, auf den Nocken 51 aufgeclipsten Verschleißbleche 1.

Zum Aufclipsen werden die Verschleißbleche 1 entgegen deren Vorspannung verformt.

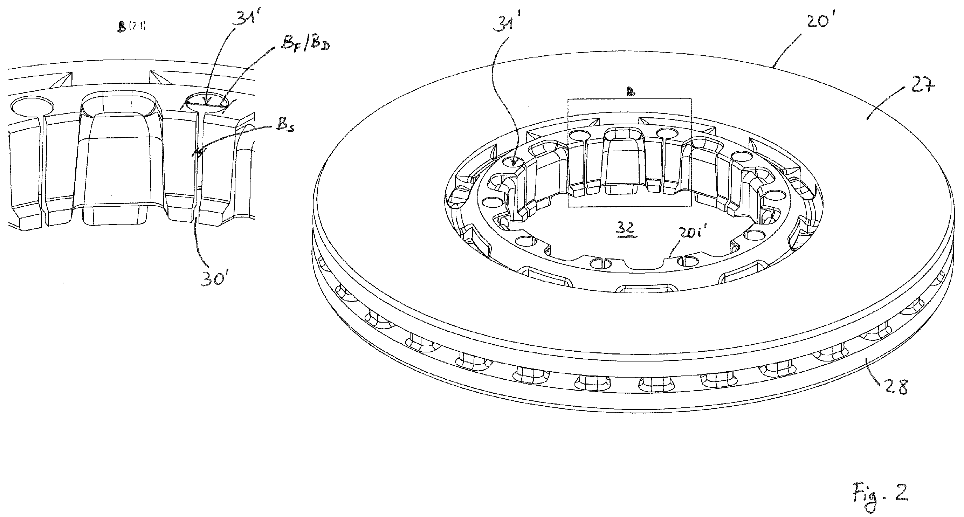

In der in Figur 2 gezeigten erfindungsgemäßen Ausführungsform ist die zur Bremsscheibe 20' korrespondierende Bremsnabe nicht dargestellt. Die in Figur 2 gezeigte Bremsscheiben-Nabenverbindung unterscheidet sich von der in Figur 1 gezeigten ersten Ausführungsform dadurch, dass die Formschlusskonturen zumindest teilweise durch Durchgangsöffnungen 31' gebildet werden. Diese sind konzentrisch am Innenumfang 20i' der Bremsscheibe 20' angeordnet und dienen zur Kraftübertragung von der korrespondierende Zapfen aufweisenden Bremsnabe auf die Bremsscheibe 20'.

Im Übrigen gilt das für die erste Ausführungsform gemäß Figur 1 gesagte analog mit dem Unterschied, dass die Durchgangsöffnungen 31 bei der ersten Ausführungsform nur mittelbar an der Kraftübertragung zwischen der Bremsnabe 50 und der Bremsscheibe 20 beteiligt sind.

### Bezugszeichenliste

- 1: Verschleißbleche
- 2, 2': Verschleißschenkel
- 2i, 2i': innere Verschleißflächen
- 2v, 2v': äußere Verschleißflächen
- 2f, 2f': Falzabschnitt
- 3: Zwischenschenkel
- 4: Durchgangsöffnung
- 20, 20': Bremsscheibe
- 20i, 20i': Innenumfang
- 21: Nockenaufnahmen
- 22, 22': Abstützflächen
- 23, 23': Auflageflächen
- 25: Fixierseiten
- 26: Vertiefungen
- 27: Reibringe
- 28: Reibringe
- 29: Lüftungskanäle
- 30, 30': Schlitze
- 31, 31': Durchgangsöffnungen
- 32: Aufnahmeöffnung
- 50: Bremsnabe
- 51: Nocken
- 52, 52': Abstützflächen
- 53, 53': Auflageflächen

## Patentansprüche

1. Bremsscheibe-Nabe Kombination zur Betätigung der Bremsscheibe beim Bremsen mit:
- einer konzentrisch zur Bremsscheibe (20') angeordneten Aufnahmeöffnung (32) der Bremsscheibe (20') zur Aufnahme der Bremsnabe (50) und
- an einem die Aufnahmeöffnung (32) begrenzenden Innenumfang (20i) der Bremsscheibe (20') angeordneten Formschlusskonturen zur Kraftübertragung einer Rotationskraft der Bremsnabe (50) auf die Bremsscheibe (20'),
wobei
im Bereich der Formschlusskonturen radial zur Aufnahmeöffnung (32) gerichtete, zumindest überwiegend axial verlaufende Schlitze (30') angeordnet sind,
**dadurch gekennzeichnet, dass**
die Schlitze (30`) an axial verlaufenden Durchgangsöffnungen (31`) vorgesehen sind, wobei die Durchgangsöffnungen (31`)unmittelbar an der Kraftübertragung zwischen der Bremsnabe (50) und der Bremsscheibe (20') beteiligt sind.

2. Bremsscheibe-Nabe Kombination nach Anspruch 1, bei der die Schlitze (30') durchgehend ausgebildet sind.

## Claims

1. A brake disc/hub combination for the actuation of the brake disc during braking with:
- a locating opening (32) of the brake disc (20') for receiving the brake hub (50) arranged concentrically to the brake disc (20') and
- form-fitting contours arranged on an inner circumference (20i) of the brake disc (20') delimiting the locating opening (32) for the force transmission of a rotational force of the brake hub (50) to the brake disc (20'),
wherein
at least predominantly axially running slots (30') are arranged in the region of the form-fitting contours aligned radially to the locating opening (32),
**characterized in that**
the slots (30') are provided on axially running through-openings (31'), wherein the through-openings (31') are directly involved in the force transmission between the brake hub (50) and the brake disc (20').

2. The brake disc/hub combination according to claim 1, wherein the slots (30') are continuous.

## Revendications

1. Combiné de disque et de moyeu de frein pour l'actionnement du disque de frein au freinage, comportent :
- un orifice récepteur (32) de disque de frein (20') disposé concentriquement par rapport au disque de frein (20') et destiné à recevoir le moyeu de frein (50) et
- des contours à correspondance géométrique disposés au niveau d'une circonférence intérieure (20i) limitant l'orifice récepteur (32) du disque de frein (20') pour la transmission de force d'une force de rotation du moyeu de frein (50) vers le disque de frein (20'),
dans lequel,
au niveau des contours à correspondance géométrique, sont disposées des fentes (30') dirigées radialement vers l'orifice récepteur (32) et s'étendant du moins majoritairement axialement,
**caractérisé en ce que**
les fentes (30') sont prévues au niveau d'orifices traversants s'étendant axialement (31'), les orifices traversants (31') participant directement à la transmission de force entre le moyeu de frein (50) et le disque de frein (20').

2. Combiné de disque et de moyeu de frein selon la revendication 1, dans lequel les fentes (30') sont de type continu.
